# EUROPEAN PATENT APPLICATION

(11) **EP 4 512 287 A1**
(43) Date of publication of application: **26.02.2025**
(21) Application number: 24175006.6
(22) Date of filing: 09.05.2024
(51) Int. Cl.: A47J 37/06

(54) **DUAL-CHAMBER AIR FRYER WITH EASILY REMOVABLE POT SETS**

(30) Priority: 25.08.2023 CN 202322306527 U
(71) Applicant: Huayu Electrical Appliance Group Co., Ltd., Ningbo (CN)
(72) Inventor: XU, Jiasheng, Cixi (CN); DU, Liusheng, Cixi (CN); LI, Haifeng, Cixi (CN)
(74) Representative: Zaboliene, Reda

(57) **Abstract**

The invention relates to the technical field of air fryers, and discloses a dual-chamber air fryer with easily removable pot sets. In an embodiment of the invention, the air fryer includes a fryer body consisting of two cooking chambers; each cooking chamber is configured for placement of a cooking pot set; each cooking pot set includes a window frame, one side of which is connected to a see-through assembly and the other side of which is removably connected to a visible element, and a cavity is formed between the visible element and the see-through assembly; the window frame is provided with finger insertion slots, by means of which a force is applied to the visible element to separate the visible element from the window frame; or the window frame is provided with a snap fit assembly, which is operable to trigger the separation of the visible element from the window frame. The invention allows for simultaneous cooking of a variety of food ingredients, and has the advantages of inner cooling to prevent high-temperature dead angle, and easy removal of the cooking pot sets.

## Description

### BACKGROUND OF THE INVENTION

### 1. Technical Field

The invention relates to the technical field of air fryers, and in particular, to a dual-chamber air fryer with easily removable pot sets.

### 2. Description of Related Art

Air fryers mainly cook food by using air to replace hot oil originally in a frying pan, and at the same time, hot air blows away moisture on the surface layer of the food to achieve a similar effect of frying food ingredients. The basic working principle of the air fryer is the "high-speed air circulation technology", where air is heated at high temperature by heating tubes in the air fryer to produce hot air, then, high-temperature air is blown into a pot by a fan to heat the food in the pot, and the hot air is circulated in a sealed space to fry the food by virtue of oil therein to thus dehydrate the food and make the surface of the food golden and crispy, thereby achieving a frying effect.

In a specific use process, in order to facilitate a user to frequently observe part of the food to be processed in the air fryer, a visible window structure is added to facilitate operations such as observation, stirring, turning, picking and placing. In this way, the problem concerning food observation is solved to certain extent. However, since a conventional visible window structure is integral and unremovable, oil stains are accumulated in a gap between the fryer and a panel after long-term use. That is, oily fume or other debris enter a cavity in the middle of the visible window structure. This prevents the user from observing the condition of food, but also makes it difficult for the user to carry out removal and cleaning.

In order to cook a variety of different food at the same time and improve the cooking efficiency when the air fryer is used, a dual-chamber air fryer is gradually applied to scenes of life. The air fryer of this type generally includes an outer housing and an inner housing; the inner housing is provided with two cooking chambers configured for placement of corresponding cooking pot sets, respectively; a hot air fan and a heating tube are mounted on the inner housing and above the cooking chambers; the heating tube is configured to heat air; and under the action of the hot air fan, the high-temperature air flows through the cooking pot sets to cook food ingredients correspondingly. However, there is generally no air flowing in an entrapping passage between the two cooking chambers in the existing dual-chamber air fryer, easily leading to high-temperature dead angle during working. After working for a long time, the air fryer undergoes certain thermal deformation or melting or other abnormal conditions.

### BRIEF SUMMARY OF THE INVENTION

The invention provides an air fryer allowing for simultaneous cooking of a variety of food ingredients, with an inner cooling feature to prevent high-temperature dead angle and easily removable cooking pot sets.

To achieve the object above, the invention employs the following technical solutions:
a dual-chamber air fryer with easily removable pot sets includes a fryer body consisting of two cooking chambers, wherein each of the cooking chambers is configured for placement of a cooking pot set; each of the cooking pot sets includes a window frame, one side of which is connected to a see-through assembly, and the other side of which is removably connected to a visible element, and a cavity is formed between the visible element and the see-through assembly; and the window frame is provided with finger insertion slots, by means of which a force is applied to the visible element to separate the visible element from the window frame; or the window frame is provided with a snap fit assembly, which is operable to trigger the separation of the visible element from the window frame.

Principle and advantages of this solution: The visible element is removably disposed on the window frame, which not only facilitates the formation of a cavity between the visible element and the see-through assembly, but also facilitates the removal of the visible element and the cleaning of the structure of the visible element; the window frame is provided with the finger insertion slots, which facilitate the application of an external force to the visible element by a human finger according to needs, thereby separating the visible element from the window frame under the action of the external force; or the snap fit assembly is disposed and can be conveniently operated correspondingly according to needs to facilitate the separation of the visible element from the window frame, making it simple and convenient to install and remove the visible element.

Preferably, as an improvement, the window frame is provided with a first opening, an edge of which is provided with a mounting slot configured for mounting of the see-through assembly.

Beneficial effects: the mounting slot is provided in the edge of the first opening to facilitate the adapted mounting of the see-through assembly and the corresponding removal operation.

Preferably, as an improvement, the see-through assembly includes a see-through body, an edge of which is provided with a flexible sealing element adapted to the mounting slot.

Beneficial effects: with the above technical solution, the see-through assembly is mounted by means of the sealing element, which is flexible, facilitates the mounting, and can correspondingly ensure the sealing effect at the connection.

Preferably, as an improvement, the window frame is provided with a clamping slot, the visible element is provided with a fastener adapted to the clamping slot; and a force is applied to the visible element by means of the finger insertion slots to separate the fastener from the clamping slot.

Beneficial effects: with the above technical solution, the cooperation between the clamping slot and the fastener makes it convenient to mount the visible element on the window frame compactly and firmly, and to remove the visible element according to needs for corresponding cleaning.

Preferably, as an improvement, the fryer body includes an outer housing and an inner housing, between which a cold air passage is formed, an entrapping passage is formed between the cooking chambers and the inner housing, and the cold air passage is communicated to the entrapping passage; the outer housing is provided with air intakes, the inner housing is provided with a cold air circulating structure and an air intake structure driving air to flow, and a main outlet air flow passage is communicated between the cold air circulating structure and the outer housing; the inner housing is provided with a cold air outlet disposed between the two cooking chambers, the cold air circulating structure is provided with an air guide port, and an air guide passage is communicated between the air guide port and the cold air outlet; and the inner housing is provided with an air inlet, the air intake structure draws air from the air inlet and guides part of the air into the air guide passage, and a drive element is mounted on the inner housing, and is configured to drive the air intake structure to operate.

Beneficial effects: with the above technical solution, the cold air passage is arranged to guide and concentrate cold air delivered from the air guide port, such that the flowing direction of the cold air is guided, making it difficult for the air to stay in the interior and avoiding the situation that the air repeatedly absorbs heat and has very high local temperature, thereby improving the cooling effect; and meanwhile, the flowing speed of the cold air is also increased to accelerate internal circulation, such that the air can take away more heat to further improve the cooling effect, avoid high-temperature dead angle, prevent components in the air fryer from being damaged at high temperature, thereby prolonging the service life of the air fryer.

Preferably, as an improvement, two mounting cavities are disposed on top of the inner housing, and a first heating tube set and a second heating tube set are mounted in the two mounting cavities, respectively; the two mounting cavities vertically correspond to the corresponding cooking chambers, respectively; and the first heating tube set includes a heating tube A and a heating tube B, the second heating tube set includes a heating tube C, power of the heating tube A is greater than power of the heating tube B, and power of the heating tube C is greater than the power of the heating tube B.

Beneficial effects: with the above technical solution, the heating tubes A, B and C differ in power, in particular, the heating tubes A and B in the first heating tube set have large power and small power respectively, and the total power of the first heating tube set is the sum of power of the heating tubes A and B, such that three power modes, namely, high-power cooking, intermediate-power cooking, and low-power cooking can be achieved, which expands the range of use and can meet the heat requirements for cooking different food.

Preferably, as an improvement, the second heating tube set further includes a heating tube D, the power of the heating tube B is greater than power of the heating tube D, and the power of the heating tube C is greater than the power of the heating tube D.

Beneficial effects: with the above technical solution, the heating tube D is added to further meet the heat requirements for cooking different food, such that more types of food ingredients can be cooked, or one food ingredient can be cooked with different heat combinations depending on the cooking stage to achieve a better cooking effect, that is, the heat is intensive in the high-power mode and is low and stable in the low-power mode.

Preferably, as an improvement, a grill is placed in each of the cooking pot sets, ribs are disposed in a body region of the grill and configured to support food ingredients, and a heat circulating gap is formed between every two adjacent ribs.

Beneficial effects: with the above technical solution, the ribs are disposed on the grill and in particular when steak is cooked, can support the steak at intervals to prevent the bottom of the steak from completely resting on the surface of the grill; during actual cooking, flowing heat in the cooking pot set can dynamically flow through heat circulation gaps to allow the bottom of the steak to be fully cooked; and cooking traces can be formed at the contacts between the ribs and the steak, such that the aesthetic degree and the actual taste of food can be appropriately increased.

Preferably, as an improvement, the snap fit assembly includes a pressing element, a clamping element, and a supporting element, the supporting element is disposed on the window frame, and the snap clips are disposed on the clamping element; the pressing element is provided with an operation portion, one end of which is exposed out of the window frame, and the operation portion is provided with a first elastic element; the pressing element is provided with a pushing portion, which is slidably connected onto the supporting element; the clamping element is movably connected between the pushing portion and the supporting element, and second elastic elements are disposed between the clamping element and the supporting element; and when the operation portion is operated to drive the pressing element to move, the pushing portion extrudes downward the clamping element to separate the snap clips on the clamping element from the hooking portions on the visible element.

Beneficial effects: with the above technical solution, the reasonable arrangement of the snap fit assembly can be facilitated; and the pressing element, the clamping element, and the supporting element cooperate such that, when the corresponding operation portion is operated to drive the pressing element to move, the pushing portion extrudes downward the clamping element to separate the snap clips on the clamping element from the hooking portions on the visible element, i.e., achieving removal of the visible element.

Preferably, as an improvement, the supporting element is provided with a sliding chute, and the pushing portion of the pressing element is provided with a sliding connection portion, which is adapted to the sliding chute.

Beneficial effects: with the above technical solution, the pressing element can accordingly move conveniently along the supporting element in a preset direction.

Preferably, as an improvement, the pushing portion of the pressing element is provided with obliquely arranged press-holding surfaces, the clamping element is provided with press-holding blocks, and the pressing-holding blocks are provided with inclined surfaces, which are adapted to the press-holding surfaces.

Beneficial effects: with the above technical solution, the cooperation between the press-holding surfaces and the inclined surfaces is facilitated such that, when the clamping element is stressed to move inward, the press-holding surfaces extrude downward the corresponding inclined surfaces to thus allow the clamping element to move downward therewith, that is, the clamping element drives the snap clips to move downward to separate the snap clips on the clamping element from the hooking portions on the visible element.

Preferably, as an improvement, the supporting element is provided with bearing portions, and the clamping element is provided with rabbets, which are adapted to the bearing portions.

Beneficial effects: with the above technical solution, the matching between the rabbets and the bearing portions facilitates further limiting of the movement direction of the clamping element, i.e., achieving the effect of limiting and guiding the clamping element.

Preferably, as an improvement, the clamping element is provided with a limiting portion, which extends to and below the pushing portion.

Beneficial effects: with the above technical solution, the clamping element is prevented from disengagement between the pushing portion and the supporting element.

Preferably, as an improvement, the window frame is connected to an inner pot, a second opening is provided in the inner pot, and a space inside the inner pot can be observed sequentially through the visible element, the see-through assembly, and the second opening.

Beneficial effects: with the above technical solution, the space inside the inner pot can be observed conveniently.

### BRIEF DESCRIPTION OF THE SEVERAL VIEWS OF THE DRAWINGS

FIG. 1 shows a schematic diagram of a dual-chamber air fryer with easily removable pot sets according to Embodiment I of the invention;
FIG. 2 shows a schematic diagram of the distribution of cooking chambers according to Embodiment I of the invention;
FIG. 3 shows a schematic diagram of a cooking pot set according to Embodiment I of the invention;
FIG. 4 shows a schematic exploded view of the cooking pot set according to Embodiment I of the invention;
FIG. 5 shows a schematic diagram of a window frame according to Embodiment I of the invention;
FIG. 6 shows a schematic enlarged view of A in FIG. 5;
FIG. 7 shows a schematic diagram of a panel according to Embodiment I of the invention;
FIG. 8 shows a schematic diagram of a visible element according to Embodiment I of the invention;
FIG. 9 shows a schematic diagram of a dual-chamber air fryer with easily removable pot sets according to Embodiment II of the invention;
FIG. 10 shows a schematic exploded view of a structure according to Embodiment II of the invention;
FIG. 11 shows a schematic diagram of the connection between a visible element and a window frame according to Embodiment II of the invention;
FIG. 12 shows a schematic diagram of the connection between a see-through assembly and the window frame according to Embodiment II of the invention;
FIG. 13 shows a schematic diagram of the visible element according to Embodiment II of the invention;
FIG. 14 shows a schematic diagram of the visible element from another perspective according to Embodiment II of the invention;
FIG. 15 shows a schematic diagram of the connection between a snap fit assembly and the window frame according to Embodiment II of the invention;
FIG. 16 shows a schematic diagram of the window frame according to Embodiment II of the invention;
FIG. 17 shows a schematic diagram of the snap fit assembly according to Embodiment II of the invention;
FIG. 18 shows a schematic exploded view of the structure of the snap fit assembly according to Embodiment II of the invention;
FIG. 19 shows a schematic diagram of a supporting element according to Embodiment II of the invention;
FIG. 20 shows a schematic diagram of a pressing element according to Embodiment II of the invention;
FIG. 21 shows a schematic diagram of the pressing element from another perspective according to Embodiment II of the invention;
FIG. 22 shows a schematic diagram of a clamping element according to Embodiment II of the invention;
FIG. 23 shows a schematic diagram of the clamping element from another perspective according to Embodiment II of the invention;
FIG. 24 shows a schematic diagram of a dual-chamber air fryer with easily removable pot sets according to Embodiment III of the invention;
FIG. 25 shows a schematic diagram of a connecting relationship of an operation portion according to Embodiment III of the invention;
FIG. 26 shows a schematic diagram of a dual-chamber air fryer with easily removable pot sets according to Embodiment IV of the invention;
FIG. 27 shows a schematic diagram of a connecting relationship of an operation portion according to Embodiment IV of the invention;
FIG. 28 shows a schematic exploded view of a structure of a snap fit assembly according to Embodiment IV of the invention;
FIG. 29 shows a schematic sectional view of a dual-chamber air fryer with easily removable pot sets according to Embodiment V of the invention;
FIG. 30 shows a schematic diagram of a lower integrated core according to Embodiment V of the invention;
FIG. 31 shows a schematic diagram of an upper integrated core according to Embodiment V of the invention;
FIG. 32 shows a schematic diagram of the upper integrated core according to Embodiment V of the invention;
FIG. 33 shows a schematic sectional view of an internal airflow movement path of the dual-chamber air fryer with easily removable pot sets according to Embodiment V of the invention;
FIG. 34 shows a schematic diagram of a first heating tube set and a second heating tube set according to Embodiment VI of the invention;
FIG. 35 shows a schematic diagram of a first heating tube set and a second heating tube set according to Embodiment VII of the invention; and
FIG. 36 shows a schematic diagram of a grill according to Embodiment VIII of the invention.

### DETAILED DESCRIPTION OF THE INVENTION

The following provides description in further detail in conjunction with specific embodiments.

Reference signs in the drawings of the specification include:
10, fryer body; 11, cooking chamber; 12, outer housing; 13, inner housing; 13a, mounting cavity; 14, cold air passage; 15, entrapping passage; 16, air intake; 17, upper integral core; 18, lower integral core; 19, air intake structure; 20, cooking pot set; 21, main outlet air flowing passage; 22, cold air outlet; 23, air guide port; 24, air guide passage; 25, air inlet; 26, drive element; 27, hot air fan; 28, cover portion; 29, first heating tube set; 30, second heating tube set; 40, grill; 41, rib; 42, heat circulating gap; 50, shunt plate; 100, window frame; 101, first opening; 102, mounting slot; 103, clamping port; 104, operation opening; 105, finger insertion slot; 106, limiting rabbet; 107, clamping slot; 110, handle; 120, panel; 121, limiting protrusion; 122, inner recess; 200, see-through assembly; 210, see-through body; 220, sealing element; 300, visible element; 301, clamping portion; 302, hooking portion; 303, fastener; 400, snap fit assembly; 410, guiding element; 420, pressing element; 421, operation portion; 422, first elastic element; 423, pushing portion; 424, sliding connection portion; 425, press-holding surface; 426, limiting protrusion; 430, clamping element; 431, snap clip; 432, press-holding block; 433, inclined surface; 434, limiting portion; 440, supporting element; 441, second elastic element; 442, sliding chute; 443, bearing portion; 444, rabbet; 500, inner pot; and 501, second opening.

### Embodiment I

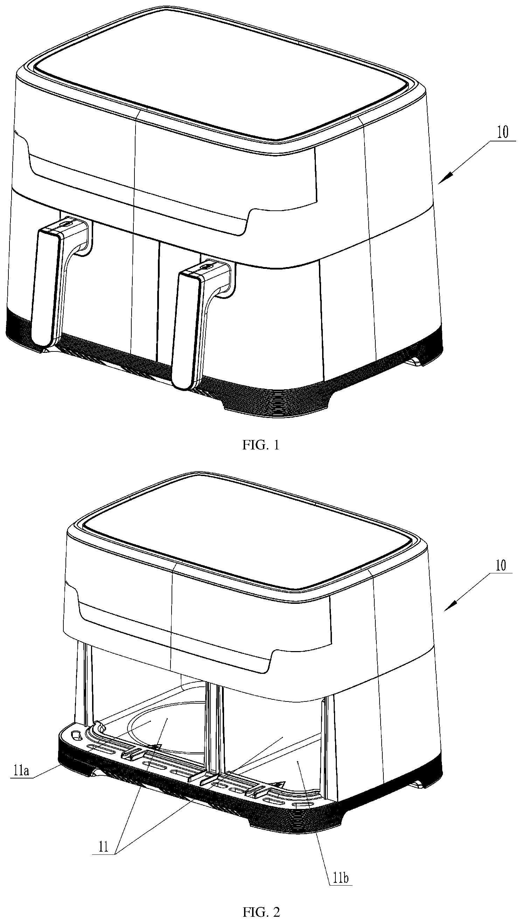

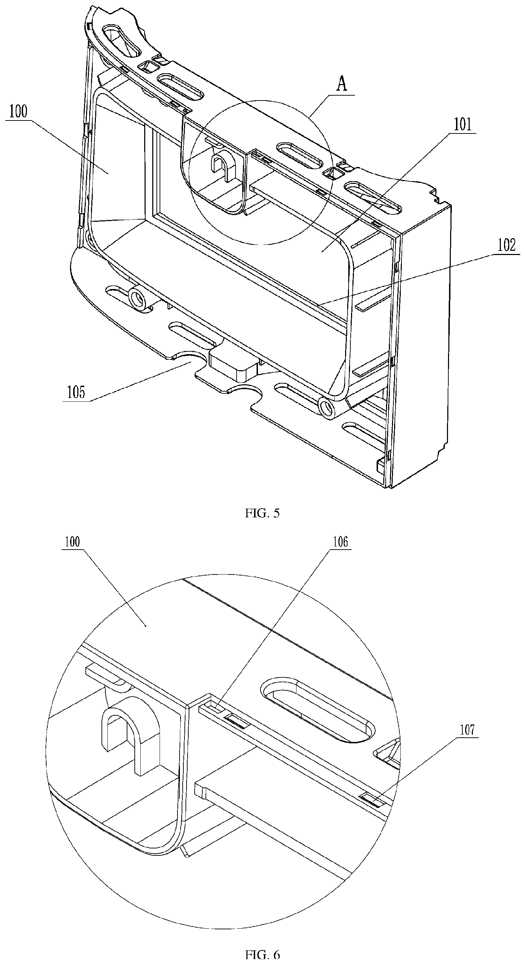

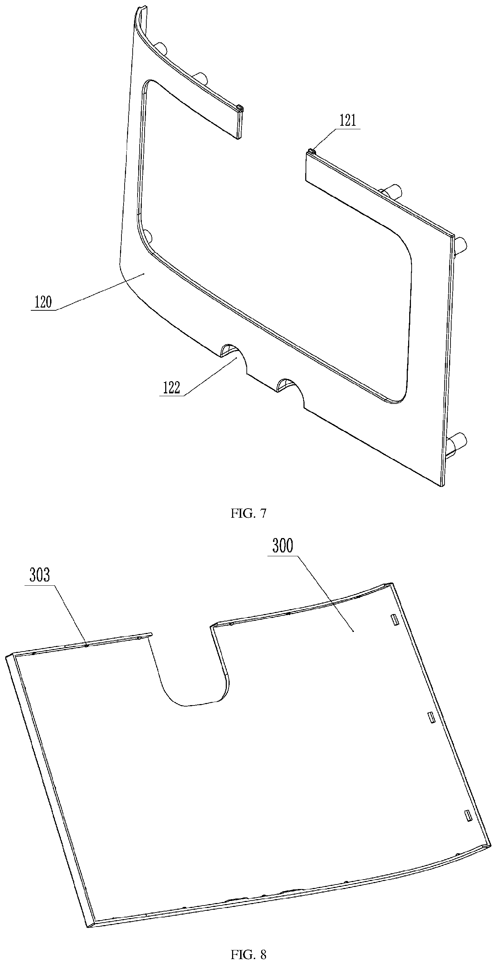

This embodiment is basically as shown in FIG. 1 to FIG. 8.

A dual-chamber air fryer with easily removable pot sets includes a fryer body 10 consisting of two cooking chambers 11. Each of the cooking chambers 11 is configured for placement of a cooking pot set 20; each of the cooking pot sets 20 includes a window frame 100, one side of which is connected to a see-through assembly 200, and the other side of which is removably connected to a visible element 300, and a cavity is formed between the visible element 300 and the see-through assembly 200; and the window frame 100 is provided with finger insertion slots 105, by means of which a force is applied to the visible element 300 to separate the visible element 100 from the window frame 100. Preferably, the visible element 300 is made of a transparent material.

Specifically, the two cooking chambers 11 include a cooling chamber 11a and a cooking chamber 11b. Here, the cooling chamber 11a s larger than the cooking chamber 11b, and the cooking pot set 20 adapted in the cooking chamber 11a is accordingly larger than the cooking pot set 20 adapted in the cooling chamber 11b.

To facilitate the mounting of the see-through assembly 200, in this embodiment, the window frame 100 is provided with a first opening 101, an edge of which is provided with a mounting slot 102 configured for mounting of the see-through assembly 200.

Specifically, the see-through assembly 200 includes a see-through body 210, an edge of which is provided with a flexible sealing element 220 adapted to the mounting slot 102. Preferably, the see-through body 210 is a glass plate; the see-through body 210 may be disposed as a monolayer glass plate or a bilayer glass plate; and the sealing element 220 is a silicone element. During specific mounting, the silicone element is wrapped on the edge of the glass plate in an assembly manner to thus achieve the desired sealing effect. Without doubt, the silicone may also be wrapped on the edge of the glass plate by means of an injection molding process.

Further, a panel 120 is mounted on the window frame 100 by means of matching screws; the top edge of the panel 120 is provided with limiting protrusions 121; the window frame 100 is provided with limiting rabbets 106; and the limiting protrusions 121 are adapted to the limiting rabbets 106. After the panel 120 is mounted on the window frame 100, the limiting protrusions 121 are limited at the limiting rabbets 106, achieving initial fixation of the panel 120.

Inner recesses 122 are disposed in the bottom edge of the panel 120; the inner recesses 122 and the corresponding finger insertion slots 105 jointly form operation spaces adapted to human fingers. This accords with human engineering and allows for smooth operation.

The window frame 100 is provided with a plurality of clamping slots 107, the inner edge of the visible element 300 is provided with a plurality of snap clips 303, which are adapted to the corresponding clamping slots 107. That is, the visible element 300 is clamped on the window frame 100 by the cooperation between the snap clips 303 and the clamping slot 107.

Further, an inner pot 500 is connected to the inner side of the window frame 100, a second opening 501 is provided in the inner pot 500, and a space inside the inner pot 500 can be observed sequentially through the visible element 300, the see-through assembly 200, and the second opening 501. The window frame 100 and the inner pot 500 are assembled using the matching screws or bolts.

### Embodiment II

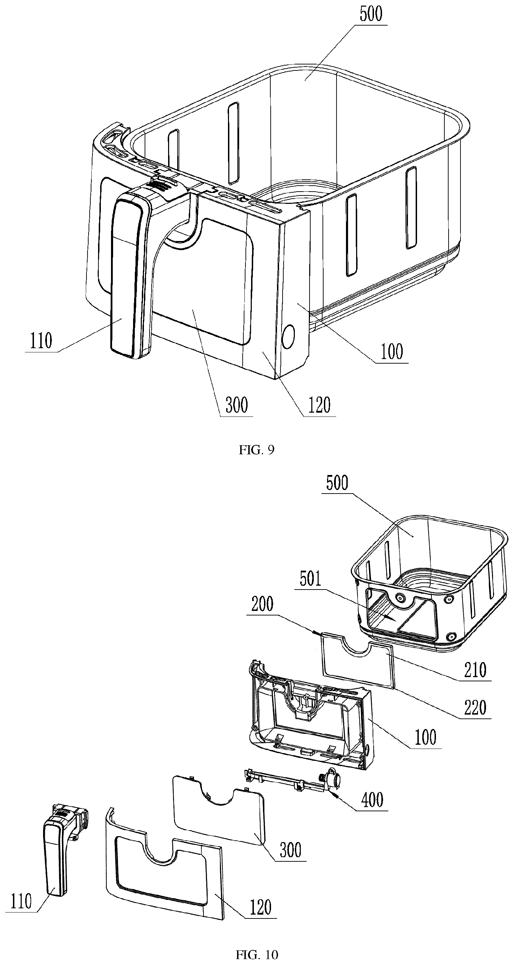

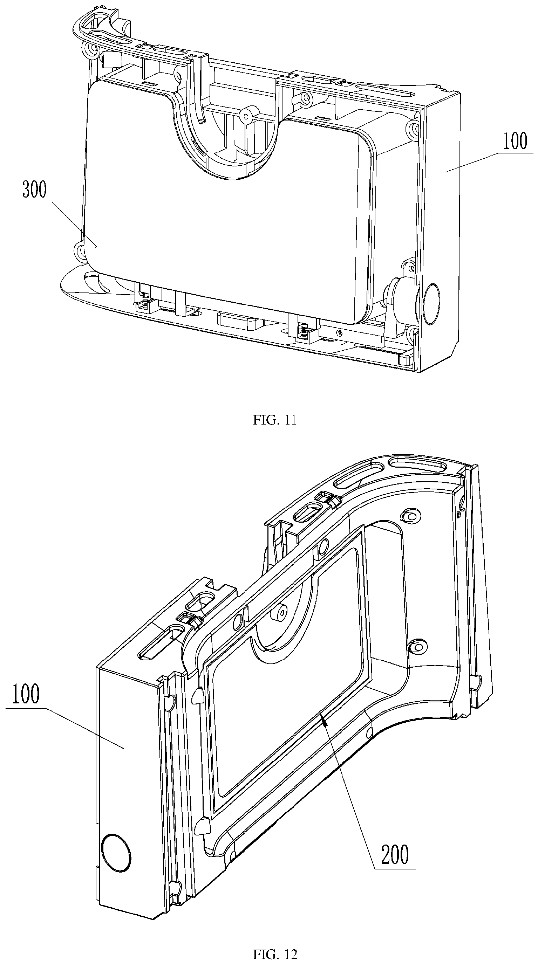

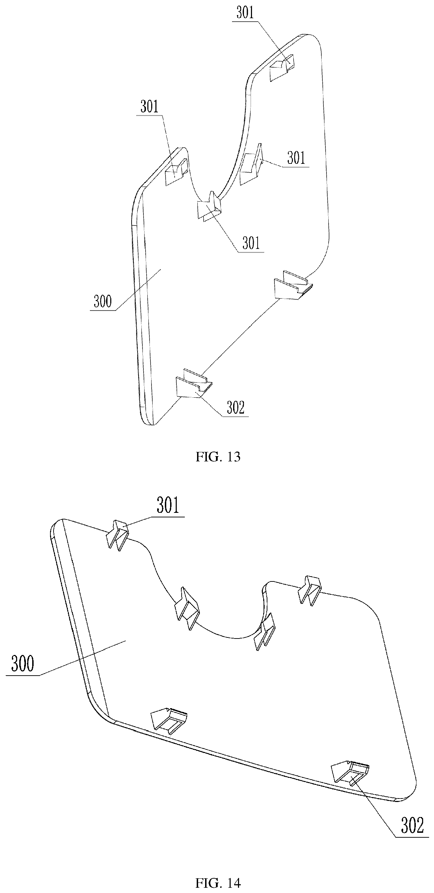

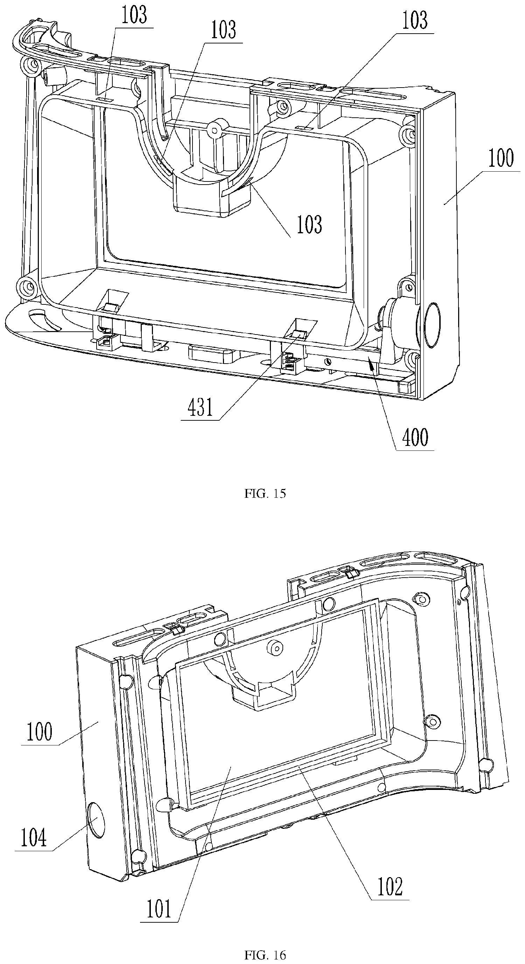

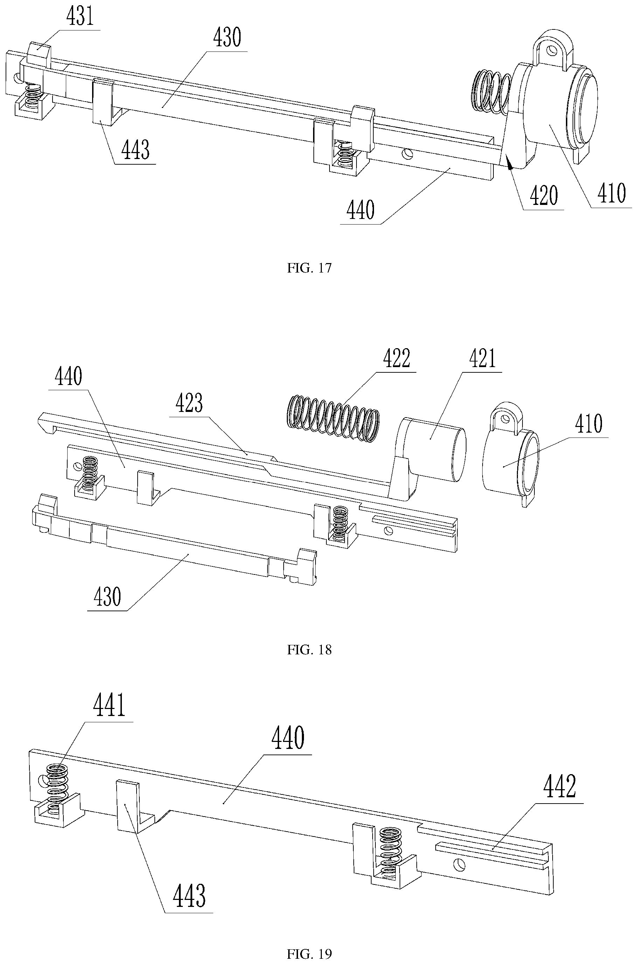

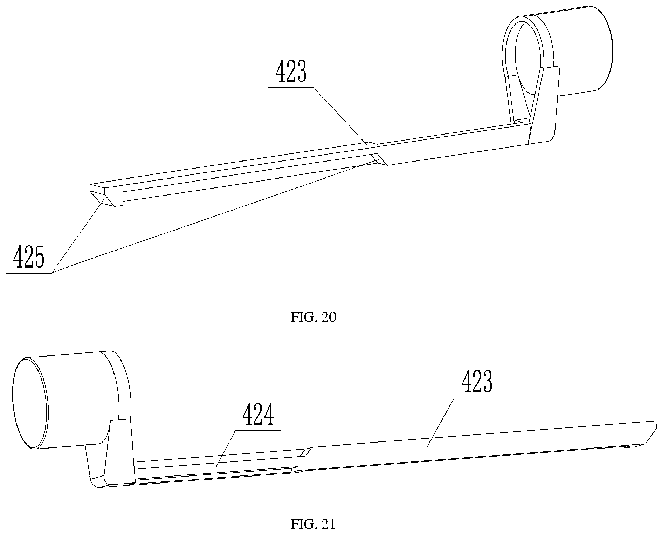

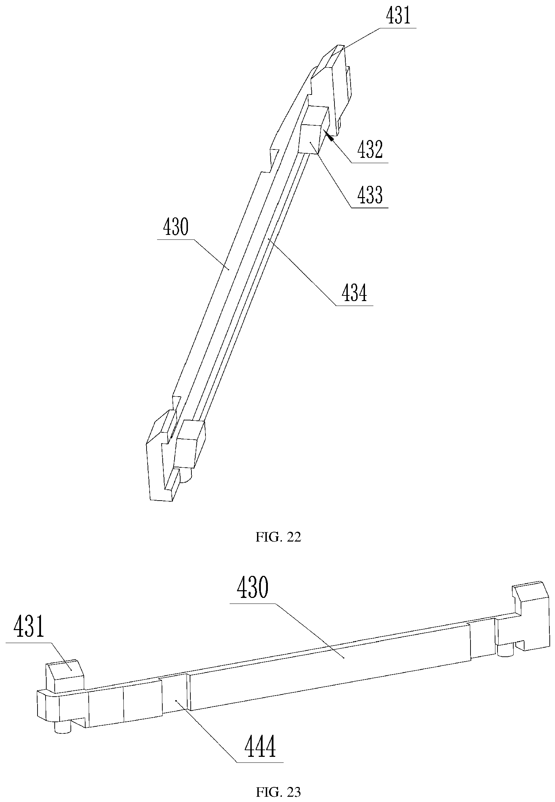

This embodiment is basically as shown in FIG. 9 to FIG. 23.

This embodiment differs from Embodiment I in that the window frame 100 is provided with a snap fit assembly 400, which is operable to trigger the separation of the visible element 300 from the window frame 100.

The window frame 100 is provided with a clamping port 103, a clamping portion 301 is disposed on the visible element 300, and the clamping portion 301 is adapted to the clamping port 103; the snap fit assembly 400 is provided with snap clips 431, the visible element 300 is provided with hooking portions 302, which are adapted to the snap clips 431; and the snap fit assembly 400 is operable to trigger separation of the snap clips 431 from the hooking portions 302. The cooperation among the clamping port 103, the clamping portion 301, the snap clips 431, and the hooking portions 302 allows for compact and firm mounting of the visible element 300 on the window frame 100, and also allows for removal of the visible element 300 according to needs for corresponding cleaning.

Specifically, in the above solution, the snap fit assembly 400 includes a pressing element 420, a clamping element 430, and a supporting element 440, the supporting element 440 is disposed on the window frame 100, and the snap clips 431 are disposed on the clamping element 430; the pressing element 420 is provided with an operation portion 421, one end of which is exposed out of the window frame 100, and the operation portion 421 is provided with a first elastic element 422; the pressing element 420 is provided with a pushing portion 423, which is slidably connected onto the supporting element 440; the clamping element 430 is movably connected between the pushing portion 423 and the supporting element 440, and second elastic elements 441 are disposed between the clamping element 430 and the supporting element 440; and when the operation portion 421 is operated to drive the pressing element 420 to move, the pushing portion 423 extrudes downward the clamping element 430 to separate the snap clips 431 on the clamping element 430 from the hooking portions 302 on the visible element 300. Preferably, the first elastic element 422 and the second elastic elements 441 are both springs. This facilitates the reasonable arrangement of the snap fit assembly 400. Moreover, the pressing element 420, the clamping element 430, and the supporting element 440 cooperate such that, when the corresponding operation portion 421 is operated to drive the pressing element 420 to move into the window frame 100, the pushing portion 423 extrudes downward the clamping element 430 to separate the snap clips 431 on the clamping element 430 from the hooking portions 302 on the visible element 300, i.e., achieving removal of the visible element 300. Based on the actions of the first and second elastic elements 422 and 441, the first elastic element 422 drives the pressing portion 421 to reset; the pressing portion 421 drives the pushing portion 423 to reset; and with the gradual loss of the extrusion of the pushing portion 423, the clamping element 430 gradually moves upwards and resets under the action of the second elastic element 441.

Further, in this embodiment, a guiding element 410 is further included. The guiding element 410 is disposed on the window frame 100; one end of the operation portion 421 movably runs through the guiding element 410; and the first elastic element 422 is between the operation portion 421 and the window frame 100, and is configured to keep the movement trend of the operation portion 421 towards the direction of the outside of the window frame 100.

Specifically, the window frame 100 is provided with an operation port 104, and one end of the operation portion 421 is adapted to the operation port 104.

To facilitate the corresponding movement of the pressing element 420 along the supporting element 440 in the preset direction, in the above solution, the supporting element 440 is provided with a sliding chute 442, and the pushing portion 423 of the pressing element 420 is provided with a sliding connection portion 424, which is adapted to the sliding chute 442. That is, accordingly, the pushing portion 423 is only allowed to move in a transverse direction.

Further, the pushing portion 423 of the pressing element 420 is provided with obliquely arranged press-holding surfaces 425, the clamping element 430 is provided with press-holding blocks 432, and the pressing-holding block 432 are provided with inclined surfaces 433, which are adapted to the press-holding surfaces 425. Specifically, two press-holding surfaces 425 are provided, and two press-holding blocks 432 on the clamping element 430 are disposed corresponding to the press-holding surfaces 425 to facilitate the cooperation between the press-holding surfaces 425 and the corresponding inclined surfaces 433, such that, when the clamping element 430 is stressed to move inward, the press-holding surfaces 425 extrude downward the corresponding inclined surfaces 433 to thus allow the clamping element 430 to move downward therewith. That is, the clamping element 430 drives the snap clips 431 to move downward to separate the snap clips 431 on the clamping element 430 from the hooking portions 302 on the visible element 300.

To facilitate the limiting and guiding of the clamping element 430, in this embodiment, and the supporting element 440 is provided with bearing portions 443, the clamping element 430 is provided with rabbets 444, which are adapted to the bearing portions 443. Specifically, the number of the bearing portions 443 and of the rabbets 444 is 4 in each case, such that the rabbets and the bearing portions cooperate to facilitate further multi-point limiting of the movement direction of the clamping element 430, i.e., achieving the effect of limiting and guiding the clamping element 430.

To prevent the clamping element 430 from falling off between the pushing portion 423 and the supporting element 440, in the above solution, the clamping element 430 is provided with a limiting portion 434, which extends to and below the pushing portion 423.

Further, an inner pot 500 is connected to the inner side of the window frame 100, a second opening 501 is provided in the inner pot 500, and a space inside the inner pot 500 can be observed sequentially through the visible element 300, the see-through assembly 200, and the second opening 501.

To facilitate a user to move the pot set structure, the window frame 100 is removable connected to a handle 110, making it convenient for the user to pick up; and moreover, the removable design provides a necessary operation space for mounting, removal, and cleaning of the visible element 300 after the handle is removed.

Further, a panel 120 is installed on the window frame 100, specifically by screws. The panel 120 is provided with a mounting hole adapted to the shape of the visible element 300, such that the external connecting surface of the whole structure is more attractive with smooth transition.

Specifically, the handle 110 is connected to the window frame 100 in a clamping manner. During actual packaging, the handle 110 can be removed to reduce the packing size.

### Embodiment III

This embodiment differs from Embodiment II in the structure and arrangement manner of the operation portion and the arranged position of the operation port.

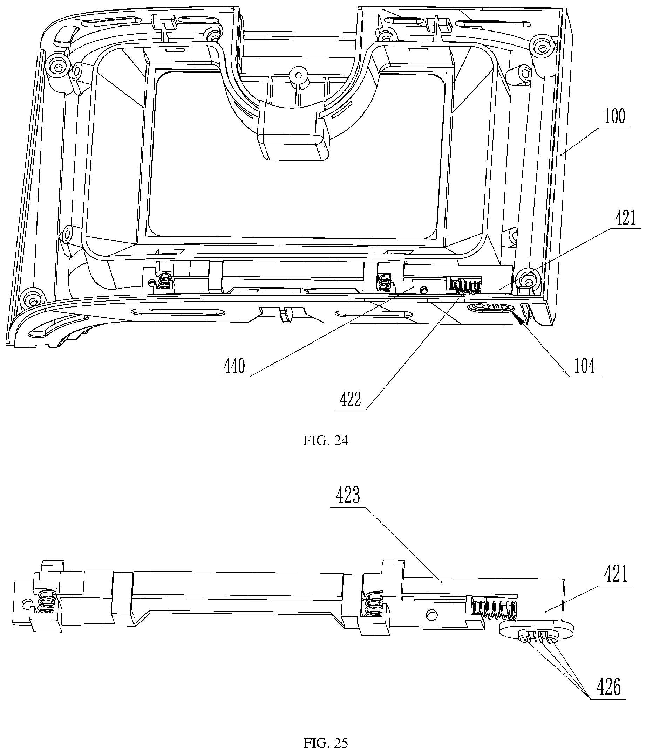

Specifically, as shown in FIGs. 24-25, the first elastic element 422 is between the operation portion 421 and the supporting element 440; one end of the operation portion 421 is transversely and movably connected onto the window frame 100, one end of the operation portion 421 is provided with a limiting protrusion 426; the window frame 100 is provided with an operation port 104, which is adapted to the limiting protrusion 426 on the operation portion; and the operation port 104 is located on the lower end of the window frame 100. The limiting protrusion 426 is disposed to facilitate a user to dial the corresponding operation portion 421, and also to facilitate limiting of the movement stroke of the operation portion 421 in the transverse direction.

### Embodiment IV

This embodiment differs from Embodiment II in the structure and arrangement manner of the operation portion and the arranged position of the operation port.

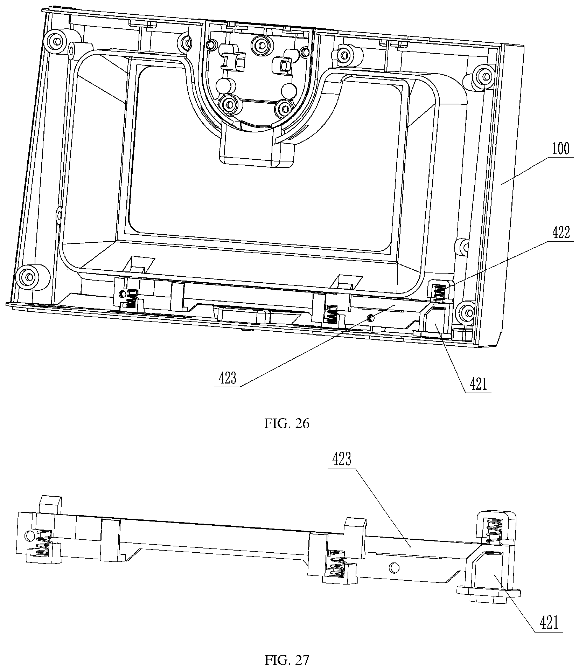

As shown in FIGs. 26-28, one end of the operation portion 421 is slidably connected to the pressing element 420. Specifically, one end of the operation portion 421 is slidably connected to the pushing portion 423; the first elastic element 422 is between the operation portion 421 and the supporting element 440; the deformation direction of the first elastic element 422 is the same as the movement direction of the operation portion 421; and the operation portion 421 is provided with an obliquely arranged extruding surface 421a, and the pressing element 420 is provided with an obliquely arranged butting surface 420a, which is adapted to the extruding surface 421a. The window frame 100 is provided with an operation port; the lower end of the operation portion is adapted to the operation port; and the operation port 421 is located on the lower end of the window frame 100.

Specifically, the supporting element 440 is provided with a spring seat 445; the first elastic element 422 is between the operation portion 421 and the spring seat 445; a travel gap is disposed between the operation portion 421 and the spring seat 445, and is configured for the vertical movement of the operation portion 421; and the extruding surface 421a is provided with a ridge 421b, and the butting surface 420a is provided with a groove 420b, which is slidably adapted to the ridge 421b.

When the operation portion 421 gradually moves towards the inside of the window frame 100 under the action of an external force, the extruding surface 421a gradually extrudes the butting surface 420a. That is, under the collective action of the extruding surface 421a and the butting surface 420a, the pushing portion 423 extrudes downward the clamping element 430 to disengage the snap clips 431 on the clamping element 430 from the hooking portions 302 on the visible element 300, i.e., achieving removal of the visible element 300.

### Embodiment V

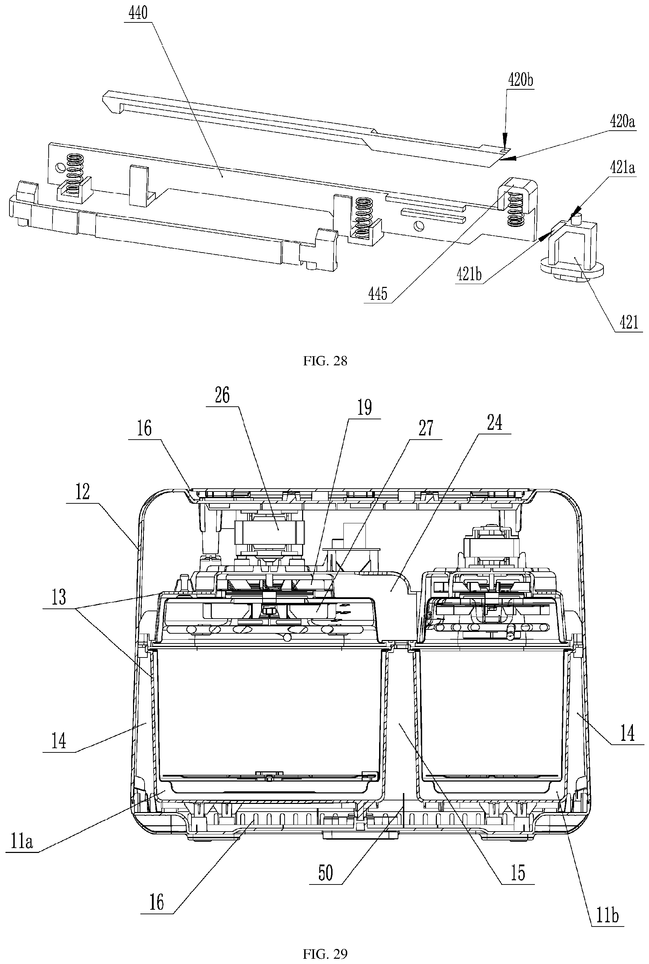

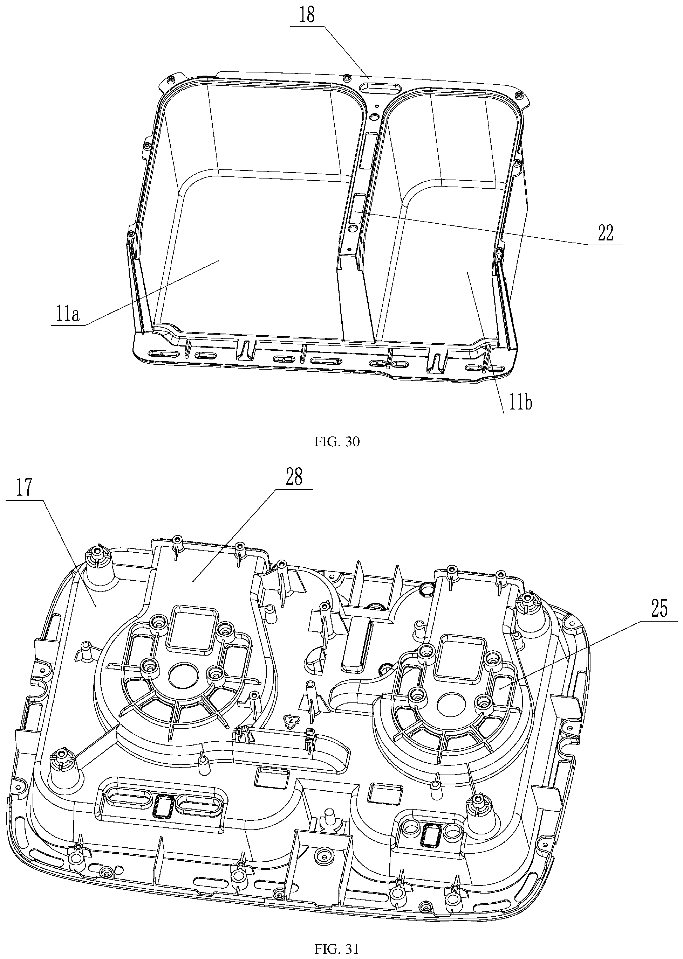

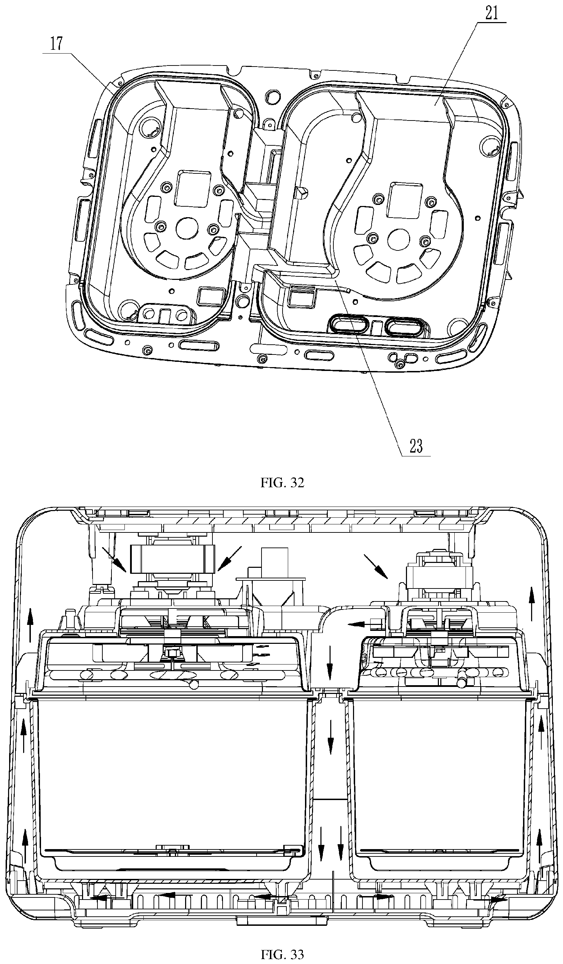

As shown in FIGs. 29-33, this embodiment differs from Embodiment I in that the internal structure is optimized to increase the internal cooling effect.

Specifically, the fryer body 10 includes an outer housing 12 and an inner housing 13, between which a cold air passage 14 is formed, an entrapping passage 15 is formed between the cooking chambers 11 and the inner housing 13, and the cold air passage 14 is communicated to the entrapping passage 15; and the outer housing 12 is provided with air intakes 16. Specifically, the air intakes 16 are divided into at least two parts. In one part, several evenly arranged air intakes are provided in the back and close to the bottom of the outer housing 12; and in the other part, the air intakes are connected end to end on the whole to form a rectangular ring provided on the top of the outer housing 12.

The inner housing 13 is provided with a cold air circulating structure and an air intake structure 19 driving air to flow, and a main outlet air flow passage 21 is communicated between the cold air circulating structure and the outer housing 12; the inner housing 13 is provided with a cold air outlet 22 disposed on an upper end between the two cooking chambers 11, the cold air circulating structure is provided with an air guide port 23, and an air guide passage 24 is communicated between the air guide port 23 and the cold air outlet 22; and the inner housing 13 is provided with an air inlet 25, the air intake structure 19 draws air from the air inlet 25 and guides part of the air into the air guide passage 24, and a drive element 26 is mounted on the inner housing 13, and is configured to drive the air intake structure 19 to operate. Preferably, the drive element 26 is a drive motor, and the air intake structure 19 is a centrifugal fan.

Specifically, the inner housing 13 consists of an upper integral core 17 and a lower integral core 18; the upper integral core 17 is mounted on the upper end of the lower integral core 18; and the cooking chamber 11a and the cooking chamber 11b are located on the lower integral core 18. A drive element 26 is mounted on the upper integral core 17, and the output end of the drive element 26 is sequentially and coaxially provided with an air intake structure 19 and a hot air fan 27. The mounting and operating principles of the air intake structure 19 and the drive element 26 are both based on the prior art, which will not be repeated here in detail.

The cold air circulating structure includes cover portions 28, which are formed by protruding from the upper integral core 17; the air inlets 25 are disposed in the cover portions 28; the air intake structure 19 is installed in and adapted to each cover portion 28; heating tubes are mounted on the upper integral core 17 and located below the hot air fan 27; and when the air intake structures 19 and the heating tubes work, the air intake structures 19 blow high-temperature air flows to the two cooking chambers 11, respectively.

After the power is turned on, the drive element 26 drives the air intake structures 19 and the hot air fan 27 to operate at the same time; by means of the hot air fan 27, the air in the inner pot 500 forms forced convection and passes through the heating tubes, which heat the flowing air; and under the continuous action of the hot air fan 27, the high-temperature air constantly flows in the inner pot 500 to cook the food ingredients.

The air intake structures 19 rotate to drive the air in the upper part in the inner housing 13 to mix with cold air drawn in by the air intakes 16 in the top of the outer housing 12 and then enter the corresponding cover portions 28; part of the air is delivered outward along the main outlet air flow passage 21 under the action of the air intake structure 19; the main outlet air flow passage 21 is disposed at the back side of the fryer body 10, thereby preventing the air flowing out from burning a user; and the other part of the air flows to the entrapping passage 15 along the air guiding port 23, the air guiding passage 24, and the cold air outlet 22 sequentially, allowing the air in the entrapping passage 15 to flow. Due to the structural factors of the cooking chambers 11a and 11b and the shunt plate 50 below the entrapping passage 15, the air is divided into two parts here. One part of the flowing air continuously moves downward, reaches the bottom of the outer housing 12 and then disperses to both sides to flow through the outer surface of the entire inner housing 13 along the cold air passage 14 on both sides, respectively; when flowing through the bottom of the lower integral core 18, the air is mixed with cold air drawn in by the air intakes at the bottom of the outer housing 12, subsequently flows together to the top of the upper integral core 17, and is again drawn by the air intake structure 19 for a new circulation.

The other part of the flowing air flows to the rear of the entrapping passage 15, is mixed with the cold air drawn in by the air intakes 16 at the bottom of the outer housing 12, and then flows to the top of the upper integral core 17, also forming a circulation of flowing cold air. In this way, two internal circulations jointly complete the cooling of the bottom of the air fryer, and both the two internal circulations pass through the entrapping passage 15, such that the entrapping passage 15, as a cooling dead angle, can be cooled better.

### Embodiment VI

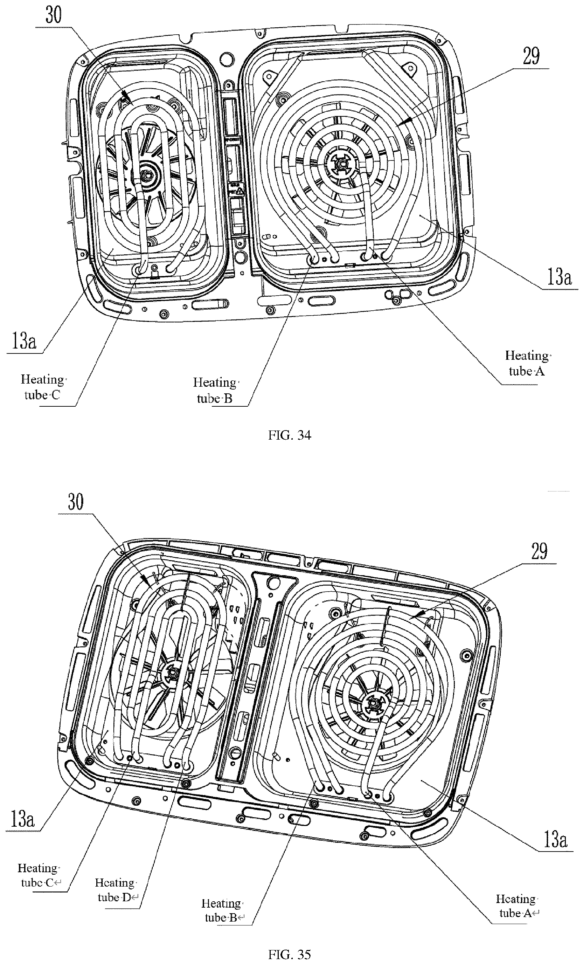

As shown in FIG. 34, this embodiment differs from Embodiment V in that the heating tubes in the internal structure are optimized to implement multiple power modes, thereby expanding the range of use to meet the heat requirements for cooking different food.

Two mounting cavities 13a are disposed in the top of the inner housing 13. That is, an upper integral core 17 is provided with two mounting cavities 13a. A first heating tube set 29 and a second heating tube set 30 are mounted in the two mounting cavities 13a, respectively; and the two mounting cavities 13a vertically correspond to the corresponding cooking chambers 11, respectively.

The first heating tube set 29 and the second heating tube set 30 are both electrically connected to a control panel, on which a plurality of matching buttons are provided to thus change or adjust the operating mode according to needs.

Specifically, the first heating tube set 29 includes a heating tube A and a heating tube B, and the second heating tube set 30 includes a heating tube C. The power of the heating tube A is greater than the power of the heating tube B; the power of the heating tube C is greater than the power of the heating tube B; and the sum of the power of the heating tube A and the power of the heating tube B is equal to the sum of the power of the heating tube B and the power of the heating tube C. The first heating tube set 29 corresponds to the cooking chamber 11a, and the second heating tube set 30 corresponds to the cooking chamber 11b. Preferably, the power of the heating tube A is 1150 W, the power of the heating tube B is 400 W, and the power of the heating tube C is 1150W.

In this embodiment, the operating modes of the first and second heating tubes are as follows.

When the cooking chamber 11a operates alone, the heating tubes A and B operate at the same time for heating, i.e., high heat here.

When the cooking chamber 11a operates alone, the heating tube A operates for heating, i.e., intermediate heat here.

When the cooking chamber 11a operates alone, the heating tube B operates for heating, i.e., low heat here.

When the cooking chamber 11b operates alone, the heating tube C operates for heating.

In a case where both the cooking chamber 11a and the cooking chamber 11b operate for alternate heating, when working for the cooking chamber 11a, the heating tube A and the heating tube B operate at the same time for heating; and when working for the cooking chamber 11b, the heating tube B and the heating tube C operate for heating. That is, when the cooking chamber 11b operates, the heating tube B operates for heating to make up for the power difference between the power of the heating tube C operating alone and the total power, and moreover, more energy can be supplied to the large chamber to achieve a better cooking effect.

In a case where both the cooking chamber 11a and the cooking chamber 11b operate for alternate heating, when working for the cooking chamber 11a, the heating tube A or the heating tube B operates for heating; and when working for the cooking chamber 11b, the heating tube C operates for heating. That is, in an ordinary mode with a single heating tube for heating, it is necessary to choose between high power and low power for the cooking chamber 11a.

In a case where both the cooking chamber 11a and the cooking chamber 11b operate for alternate heating, when working for the cooking chamber 11a, the heating tube A and the heating tube B operate at the same time for heating; and when working for the cooking chamber 11b, the heating tube C operates for heating.

When the cooking chamber 11a and the cooking chamber 11b operate at the same time or synchronous heating, the heating tube A and the heating tube C operate at the same time for heating, or the heating tube B and the heating tube C operate at the same time for heating.

The above combinations are intended to meet the heat requirements of different food, such that more types of food ingredients can be cooked by the air fryer, or one food ingredient can be cooked with different combinations depending on the cooking stage to achieve a better cooking effect.

### Embodiment VII

As shown in FIG. 35, this embodiment differs from Embodiment VI in that the second heating tube set is optimized to further implement multiple power modes, thereby expanding the range of use to meet the heat requirements for cooking different food.

Preferably, the second heating tube set further includes a heating tube D. The power of the heating tube B is greater than power of the heating tube D, and the power of the heating tube C is greater than the power of the heating tube D. Preferably, the power of the heating tube D is 300 W.

In this embodiment, the operating modes of the first and second heating tubes are as follows.
(1) When the cooking chamber 11a operates alone:
   the heating tubes A and B operate at the same time for heating, i.e., high heat here;
   the heating tube A operates for heating, i.e., intermediate heat here; or
   the heating tube B operates for heating, i.e., low heat here.
(2) When the cooking chamber 11b operates alone:
   the heating tubes C and D operate at the same time for heating, i.e., high heat here;
   the heating tube C operates for heating, i.e., intermediate heat here; or
   the heating tube D operates for heating, i.e., low heat here.
(3) When the cooking chambers 11a and 11b operate at the same time:
   3.1, in an alternate heating mode for the cooking chambers 11a and 11b:
      when the cooking chamber 11a operates, the heating tubes A and B perform heating at the same time, and when the cooking chamber 11b operates, the heating tubes C and D operate at the same time;
      when the cooking chamber 11a operates, the heating tube A or B perform heating alone, and when the cooking chamber 11b operates, the heating tube C or D operates alone;
      when the cooking chamber 11a operates, the heating tubes A and B perform heating at the same time, and when the cooking chamber 11b operates, the heating tube C or D operates alone; and
      when the cooking chamber 11a operates, the heating tube A or B perform heating alone, and when the cooking chamber 11b operates, the heating tubes C and D operate at the same time;
   3.2, in a synchronous heating mode for the cooking chambers 11a and 11b:
      the heating tube A or B and the heating tube C or D perform heating at the same time, i.e., the total power is equal to the sum of power of A and C, or of A and D, or of B and C, or of B and D.

The above solutions increase the choice of mode to further expand the scope of application, and moreover, allows for intensive high-power heat and stable low-power heat.

### Embodiment VIII

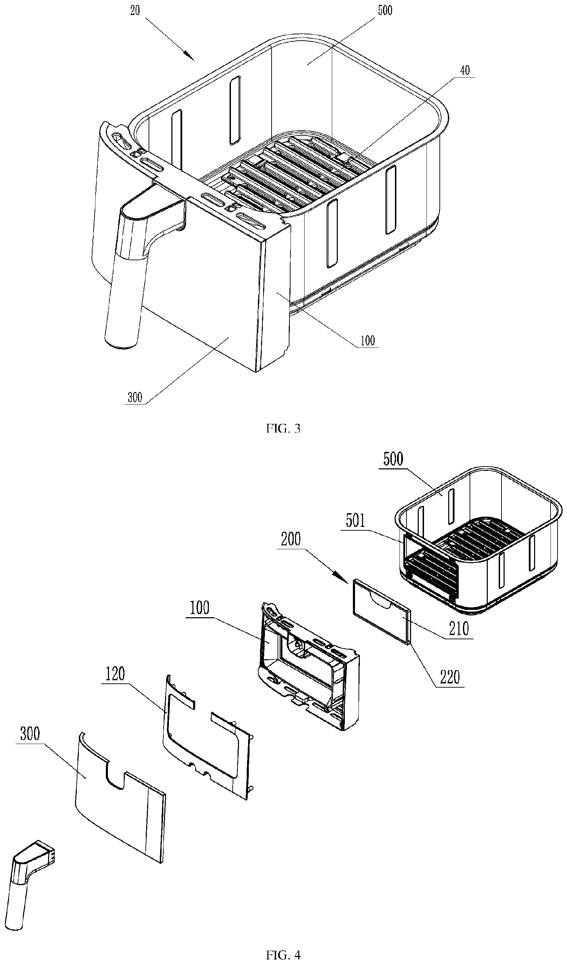

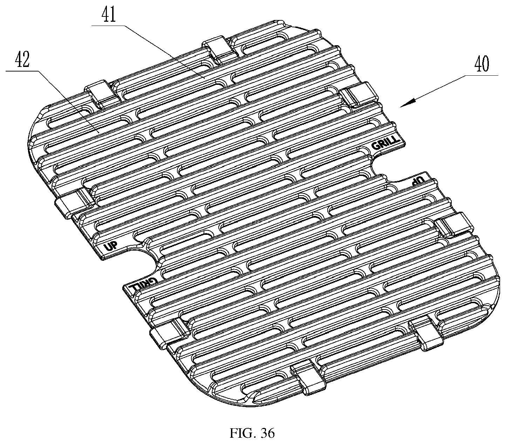

As shown in FIG. 3 and FIG. 36, this embodiment differs from Embodiment I in that a grill 40 is placed in each of the cooking pot sets, ribs 41 are disposed in a body region of the grill 40 and configured to support food ingredients, and a heat circulating gap 42 is formed between every two adjacent ribs 41.

Specifically, the grill is placed in the inner pot 500, such that, when steak is cooked, the ribs 41 can support the steak at intervals to prevent the bottom of the steak from completely resting on the surface of the grill 40; flowing heat in the cooking pot 500 set can dynamically flow through the heat circulation gaps 42 to allow the bottom of the steak to be fully cooked; and cooking traces can be formed at the contacts between the ribs 41 and the steak, such that the aesthetic degree and the actual taste of food can be appropriately increased.

The description above merely provides the embodiments of the invention, and the specific technical solutions and/or characteristics or other common knowledge known in the solutions are not described too much herein. It should be noted that a number of variations and improvements can be made by a person of ordinary skills in the art without departing from the technical solution of the invention, and these shall be construed as falling within the protection scope of the invention, and will not affect the implementation effect and the patent applicability of the invention. The protection scope of the invention shall be subject to the protection scope defined by the Claims. The specific embodiments and others stated in the specifications may be used to interpret the Claims.

## Claims

1. A dual-chamber air fryer with easily removable pot sets, comprising a fryer body (10) consisting of two cooking chambers (11), wherein
each of the cooking chambers (11) is configured for placement of a cooking pot set (20);
each of the cooking pot sets (20) comprises a window frame (100), one side of which is connected to a see-through assembly (200), and the other side of which is removably connected to a visible element (300), and a cavity is formed between the visible element (300) and the see-through assembly (200); and
the window frame (100) is provided with finger insertion slots (105), by means of which a force is applied to the visible element (300) to separate the visible element (300) from the window frame (100); or the window frame (100) is provided with a snap fit assembly (400), which is operable to trigger the separation of the visible element (300) from the window frame (100).

2. The dual-chamber air fryer with easily removable pot sets according to Claim 1, wherein the window frame (100) is provided with a first opening (101), an edge of which is provided with a mounting slot (102) configured for mounting of the see-through assembly (200).

3. The dual-chamber air fryer with easily removable pot sets according to Claim 2, wherein the see-through assembly (200) comprises a see-through body (210), an edge of which is provided with a flexible sealing element (220) adapted to the mounting slot (102).

4. The dual-chamber air fryer with easily removable pot sets according to Claims 1, wherein the window frame (100) is provided with a clamping slot (107), the visible element (300) is provided with a fastener (303) adapted to the clamping slot (107); and a force is applied to the visible element (300) by means of the finger insertion slots (105) to separate the fastener (303) from the clamping slot (107).

5. The dual-chamber air fryer with easily removable pot sets according to Claims 1, wherein the fryer body (10) comprises an outer housing (12) and an inner housing (13), between which a cold air passage (14) is formed, an entrapping passage (15) is formed between the cooking chambers (11) and the inner housing (13), and the cold air passage (14) is communicated to the entrapping passage (15);
the outer housing (12) is provided with air intakes (16), the inner housing (13) is provided with a cold air circulating structure and an air intake structure (19) driving air to flow, and a main outlet air flow passage (21) is communicated between the cold air circulating structure and the outer housing (12);
the inner housing (13) is provided with a cold air outlet (22) disposed between the two cooking chambers (11), the cold air circulating structure is provided with an air guide port (23), and an air guide passage (24) is communicated between the air guide port (23) and the cold air outlet (22); and
the inner housing (13) is provided with an air inlet (25), the air intake structure (19) draws air from the air inlet (25) and guides part of the air into the air guide passage (24), and a drive element (26) is mounted on the inner housing (13), and is configured to drive the air intake structure (19) to operate.

6. The dual-chamber air fryer with easily removable pot sets according Claim 5, wherein two mounting cavities (13a) are disposed on top of the inner housing (13), and a first heating tube set (29) and a second heating tube set (30) are mounted in the two mounting cavities (13a), respectively; the two mounting cavities (13a) vertically correspond to the corresponding cooking chambers (11), respectively; and
the first heating tube set (29) comprises a heating tube A and a heating tube B, the second heating tube set (30) comprises a heating tube C, power of the heating tube A is greater than power of the heating tube B, and power of the heating tube C is greater than the power of the heating tube B.

7. The dual-chamber air fryer with easily removable pot sets according to Claim 6, wherein the second heating tube set (30) further comprises a heating tube D, the power of the heating tube B is greater than power of the heating tube D, and the power of the heating tube C is greater than the power of the heating tube D.

8. The dual-chamber air fryer with easily removable pot sets according to Claim 1, wherein a grill (40) is placed in each of the cooking pot sets (20), ribs (41) are disposed in a body region of the grill (40) and configured to support food ingredients, and a heat circulating gap (42) is formed between every two adjacent ribs (41).

9. The dual-chamber air fryer with easily removable pot sets according to Claim 1, wherein the window frame (100) is provided with a clamping port (103), a clamping portion (301) is disposed on the visible element (300), and the clamping portion (301) is adapted to the clamping port (103); the snap fit assembly (400) is provided with snap clips (431), the visible element (300) is provided with hooking portions (302), which are adapted to the snap clips (431); and the snap fit assembly (400) is operable to trigger separation of the snap clips (431) from the hooking portions (302).

10. The dual-chamber air fryer with easily removable pot sets according to Claim 9, wherein the snap fit assembly (400) comprises a pressing element (420), a clamping element (430), and a supporting element (440), the supporting element (440) is disposed on the window frame (100), and the snap clips (431) are disposed on the clamping element (430); the pressing element (420) is provided with an operation portion (421), one end of which is exposed out of the window frame (100), and the operation portion (421) is provided with a first elastic element (422);
the pressing element (420) is provided with a pushing portion (423), which is slidably connected onto the supporting element (440); the clamping element (430) is movably connected between the pushing portion (423) and the supporting element (440), and second elastic elements (441) are disposed between the clamping element (430) and the supporting element (440); and
when the operation portion (421) is operated to drive the pressing element (420) to move, the pushing portion (423) extrudes downward the clamping element (430) to separate the snap clips (431) on the clamping element (430) from the hooking portions (302) on the visible element (300).

11. The dual-chamber air fryer with easily removable pot sets according to Claim 10, wherein the supporting element (440) is provided with a sliding chute (442), and the pushing portion (423) of the pressing element (420) is provided with a sliding connection portion (424), which is adapted to the sliding chute (442).

12. The dual-chamber air fryer with easily removable pot sets according to Claim 10, wherein the pushing portion (423) of the pressing element (420) is provided with obliquely arranged press-holding surfaces (425), the clamping element (430) is provided with press-holding blocks (432), and the pressing-holding blocks (432) are provided with inclined surfaces (433), which are adapted to the press-holding surfaces (425).

13. The dual-chamber air fryer with easily removable pot sets according to Claim 12, wherein the supporting element (440) is provided with bearing portions (443), and the clamping element (430) is provided with rabbets (444), which are adapted to the bearing portions (443).

14. The dual-chamber air fryer with easily removable pot sets according to Claim 13, wherein the clamping element (430) is provided with a limiting portion (434), which extends to and below the pushing portion (423).

15. The dual-chamber air fryer with easily removable pot sets according to Claim 1, wherein the window frame (100) is connected to an inner pot (500), a second opening (501) is provided in the inner pot (500), and a space inside the inner pot (500) can be observed sequentially through the visible element (300), the see-through assembly (200), and the second opening (501).
